# EUROPEAN PATENT APPLICATION

(11) **EP 4 198 284 A1**
(43) Date of publication of application: **21.06.2023**
(21) Application number: 22210949.8
(22) Date of filing: 01.12.2022
(51) Int. Cl.: F02C 7/12, F02C 7/224, F02C 7/232, F15B 15/14, F01D 17/26

(54) **DISTRIBUTED NETWORK OF HEAT EXCHANGERS**

(30) Priority: 17.12.2021 US 202117644985
(71) Applicant: Hamilton Sundstrand Corporation, Charlotte, NC 28217-4578 (US)
(72) Inventor: SUSCA, Ryan, Windsor, CT (US); O'RORKE, Morgan, West Hartford, CT (US); LOKHANDWALLA, Murtuza, South Windsor, CT (US)
(74) Representative: Dehns

(57) **Abstract**

An actuator (40) includes a housing (42), a first chamber (44) inside the housing, a cylinder (46) within the housing, and a second chamber (48) within the housing. The cylinder (46) fluidically isolates the first chamber (44) from the second chamber (48). The actuator (40) also includes a rod (50) connected to the cylinder (46) and extending through the second chamber (48) and the housing. A shell (52) is spaced apart from the housing (42) and defines a fluid gap between the shell (52) and the housing (42). The shell (52) includes a shell inlet fluidically connected to the fluid gap and a shell outlet fluidically connected to the fluid gap.

## Description

### BACKGROUND

This disclosure relates to a heat exchanger, and in particular, to a network of heat exchangers.

Heat exchangers are often used to transfer heat between two fluids. For example, heat exchangers are used on aircraft to transfer heat between a relatively hot air source, e.g., bleed air from a gas turbine engine, and a relatively cool air source, e.g., ram air.

### SUMMARY

In one example, a system includes a fuel source, an actuation pump fluidically connected to the fuel source, and an actuator fluidically connected to the actuation pump. The actuator includes a housing, a first chamber inside the housing, a cylinder within the housing, and a second chamber within the housing. The cylinder fluidically isolates the first chamber from the second chamber. The actuator also includes a rod extending from the cylinder and through the second chamber and the housing. A shell is spaced apart from the housing and defines a fluid gap between the shell and the housing. The shell includes a shell inlet fluidically connected to the fluid gap and a shell outlet fluidically connected to the fluid gap. The system also includes a fuel metering system, a control valve fluidically connecting the first chamber and the second chamber with the actuation pump and the fuel metering system, and an engine oil source. The engine oil source is fluidically connected to the shell inlet.

In another example, a system includes a first fluid source, an actuation pump fluidically connected to the first fluid source, and an actuator. The actuator includes a housing, a first chamber inside the housing, a cylinder within the housing, and a second chamber within the housing. The cylinder fluidically isolates the first chamber from the second chamber. The actuator also includes a rod connected to the cylinder and extending through the second chamber and the housing. A shell is spaced apart from the housing and defines a fluid gap between the shell and the housing. The shell includes a shell inlet fluidically connected to the fluid gap and a shell outlet fluidically connected to the fluid gap. The system also includes a first fluid outlet, a control valve fluidically connecting the first chamber and the second chamber with the actuation pump and the first fluid outlet, and a second fluid source. The second fluid source is fluidically connected to the shell inlet. The first fluid source is at a first temperature and the second fluid source is at a second temperature different from the first temperature.

In another example, an actuator includes a housing, a first chamber inside the housing, a cylinder within the housing, and a second chamber within the housing. The cylinder fluidically isolates the first chamber from the second chamber. The actuator also includes a rod connected to the cylinder and extending through the second chamber and the housing. A shell is spaced apart from the housing and defines a fluid gap between the shell and the housing. The shell includes a shell inlet fluidically connected to the fluid gap and a shell outlet fluidically connected to the fluid gap.

Persons of ordinary skill in the art will recognize that other aspects and embodiments of the present invention are possible in view of the entirety of the present disclosure, including the accompanying figures.

### BRIEF DESCRIPTION OF THE DRAWINGS

FIG. 1 is a schematic diagram of a system.
FIG. 2A is a schematic diagram of an actuator when a control valve is in a first position.
FIG. 2B is a schematic diagram of the actuator when the control valve is in a second position.
FIG. 3 is a schematic diagram of another system including multiple actuators from FIGS. 2A and 2B.

While the above-identified drawing figures set forth one or more embodiments of the invention, other embodiments are also contemplated. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings. Like reference numerals identify similar structural elements.

### DETAILED DESCRIPTION

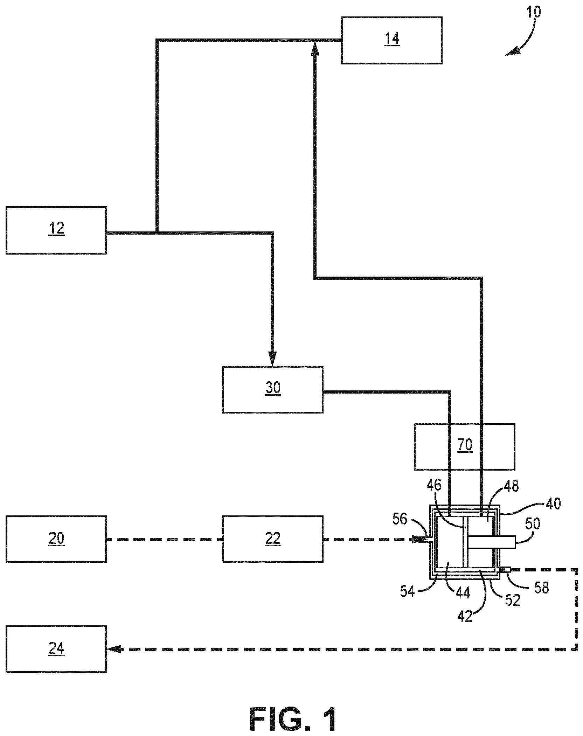

This disclosure relates to an actuator that doubles as a heat exchanger and a system that includes at least one actuator that doubles as a heat exchanger. The system includes a first fluid source, e.g., a fuel storage tank, and a second fluid source, e.g., hot engine oil. An actuation pump pressurizes the first fluid and pumps the first fluid through a control valve. The control valve directs the first fluid either into a first chamber or a second chamber of the actuator to pressurize either the first chamber or the second chamber. The control valve also fluidically connects either the first chamber or the second chamber of the actuator to a fuel outlet, e.g., a fuel metering system, to depressurize either the first or second chamber and either extend or retract a cylinder and a rod of the actuator. A second pump pressurizes the hot engine oil, which is directed through a gap of the actuator. The gap of the actuator is defined between a housing of the actuator and a shell spaced around the housing of the actuator. The shell includes a shell inlet and a shell outlet. The hot engine oil enters the gap of the actuator through the shell inlet and leaves the gap through the shell outlet. After exiting the outlet, the hot engine oil returns to a bulk oil tank. Throughout this process, heat is transferred from the hot engine oil to the fuel, to cool the hot engine oil and heat the fuel. The system that includes an actuator that doubles as a heat exchanger and the actuator will be discussed with reference to FIGS. 1-3.

FIG. 1 is a schematic diagram of system 10. System 10 includes first fluid source (or fuel source) 12, first fluid outlet 14, second fluid source (or hot engine oil source) 20, second fluid pump 22, second fluid outlet 24, actuation pump 30, actuator 40, and control valve 70. Actuator 40 includes housing 42, first chamber 44, cylinder 46, second chamber 48, rod 50, shell 52, and fluid gap 54. Shell 52 includes shell inlet 56 and shell outlet 58.

First fluid source 12 can be a bulk storage tank for engine fuel, or any other fluid source for a turbine engine. Actuation pump 30 is fluidically connected to first fluid source 12. Actuation pump 30 pressurizes the fluid or fuel that is pumped from first fluid source 12. In the example of FIG. 1, second fluid source 20 can be hot engine oil or any other hot fluid in a turbine engine. Second fluid pump 22 is fluidically connected to second fluid source 20. Second fluid pump 22 pressurizes the fluid or oil that is pumped from second fluid source 20.

First chamber 44 and second chamber 48 of actuator 40 as fluidically connected to actuation pump 30. First chamber 44, cylinder 46, and second chamber 48 are within housing 42. Cylinder 46 segregates and fluidically isolates first chamber 44 and second chamber 48. Rod 50 extends from cylinder 46 and through second chamber 48 and housing 42. Shell 52 is spaced apart from housing 42. Shell 52 can substantially enclose or cover housing 42. Substantially enclose can be defined herein as covering a majority of housing 42. The spacing between shell 52 and housing 42 defines fluid gap 54. Shell inlet 56 and shell outlet 58 are fluidically connected to fluid gap 54. Shell inlet 56 is fluidically connected with second fluid source 20 via second fluid pump 22.

Control valve 70 can be an electro-hydraulic servo valve, or any other valve that can control the flow of a fluid. Control valve 70 is fluidically connected between actuation pump 30 and actuator 40 and between actuator 40 and first fluid outlet 14. Control valve 70 operates between a first position and a second position.

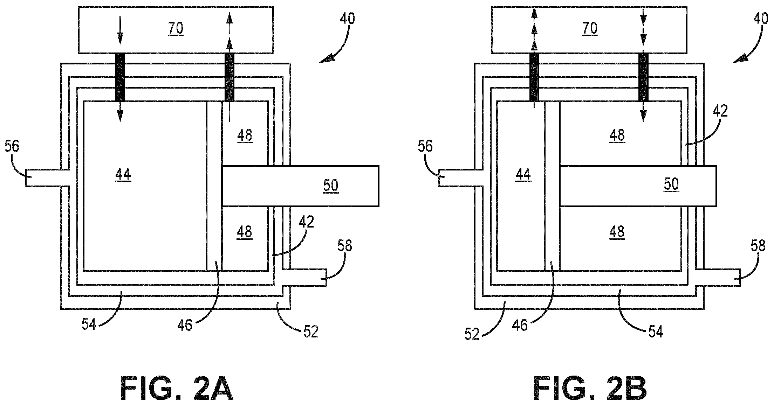

FIGS. 2A and 2B will be discussed concurrently. FIGS. 2A and 2B are schematic diagrams of actuator 40. FIG. 2A shows rod 50 of actuator 40 extended when control valve 70 is in the first position. FIG. 2B shows rod 50 of actuator 40 retracted when control valve 70 is in the second position.

In the first position, as shown in FIG. 2A, control valve 70 fluidically connects actuation pump 30 to first chamber 44 to pressurize first chamber 44 of actuator 40. In the first position, control valve 70 also fluidically connects second chamber 48 to first fluid outlet 14 to depressurize second chamber 48, drain fluid in second chamber 48 to first fluid outlet 14, and move cylinder 46 to extend rod 50.

In the second position shown in FIG. 2B, control valve 70 fluidically connects actuation pump 30 to second chamber 48 to pressurize second chamber 48 of actuator 40. In the second position, control valve 70 also fluidically connects first chamber 44 to first fluid outlet 14 to depressurize first chamber 44, drain fluid in the first chamber 48 to first fluid outlet 14, and move cylinder 46 to retract rod 50 further into housing 42.

In operation, actuation pump 30 pressurizes and circulates fuel from first fluid source 12. Actuation pump 30 pumps fuel from first fluid source 12 through control valve 70, which controls the flow of the fuel through actuator 40. As discussed above, control valve 70 controls whether rod 50 of actuation pump 30 extends or retracts with relation to housing 42. The fuel from either first chamber 44 or second chamber 48 (whichever is being depressurized) of actuator 40 is then circulated back through control valve 70 and exits system 10 through first fluid outlet 14. First fluid outlet 14 can be a fuel metering system or any other fluid control system that requires fluid to be heated before entering the fluid control system. System 10 also circulates hot engine oil from second fluid source 20. Second fluid pump 22 is an oil pump that pumps hot engine oil from second fluid source 20 through shell inlet 56 and into fluid gap 54. Hot engine oil from second fluid source 20 then flows through fluid gap 54 and leaves actuator 40 through shell outlet 58. While hot engine oil flows through fluid gap 54 heat is transferred across housing 42 from the hot engine oil from second fluid source 20 to the fuel from first fluid source 12.

In the example discussed above, the fuel from first fluid source 12 is colder than the oil from second fluid source 20. In another example, the fluid from first fluid source 12 can be hotter than the fluid from second fluid source 20. Moreover, actuation pump 30 and second fluid pump 22 can adjust the speed of the flow of fluid from first fluid source 12 and the fluid from second fluid source 20, respectively, to adjust the amount of heat transfer between the fluid from first fluid source 12 and the fluid from second fluid source 20. For example, to increase the heat transfer across housing 42, actuation pump 30 and second fluid pump 22 can decrease the pumping rate of the fluid from first fluid source 12 and the fluid from second fluid source 20. In the contrary, to decrease the heat transfer across housing 42, actuation pump 30 and second fluid pump 22 can increase the pumping rate of the fluid from first fluid source 12 and the fluid from second fluid source 20, respectively.

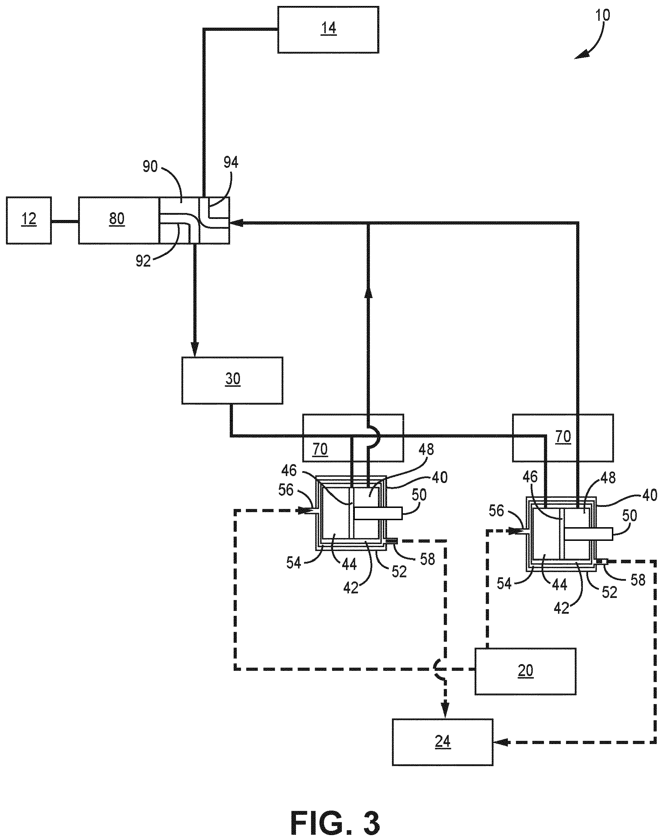

FIG. 3 is a schematic diagram of another system that includes more than one of actuator 40 from FIGS. 2A and 2B. As shown in FIG. 3, system 10 can also include boost pump 80, filter 90, and another control valve 70 to go with the additional actuator 40. Filter 90 includes first passage 92 and second passage 94.

Each actuator 40 in the example of FIG. 3 includes the components as discussed above with reference to actuator 40 in FIGS. 1-2B. In the example of FIG. 3, each actuator is also paired up with one of control valves 70. Each of control valves 70 is fluidically connected between actuation pump 30 and one of actuators 40. Each of control valves 70 is also fluidically connected between one of actuators 40 and first fluid outlet 14. Each control valve 70 also operates between a first position and a second position. Each control valve 70 can operate independent of the other control valve 70. In another example, each control valve 70 can operate in concert with the other control valve 70.

In the first position, each control valve 70 fluidically connects actuation pump 30 to first chamber 44 to pressurize first chamber 44 of the respective actuator 40. In the first position, each control valve 70 also fluidically connects second chamber 48 to first fluid outlet 14 to depressurize second chamber 48 and move cylinder 46 to extend rod 50 of the respective actuator 40.

In the second position, each control valve 70 fluidically connects actuation pump 30 to second chamber 48 to pressurize second chamber 48 of the respective actuator 40. In the second position, control valve 70 also fluidically connects first chamber 44 to first fluid outlet 14 to depressurize first chamber 44 and move cylinder 46 to retract rod 50 of the respective actuator 40.

Boost pump 80 is fluidically connected to first fluid source 12. Filter 90 is fluidically connected between boost pump 80 and actuation pump 30. First passage 92 of filter 90 fluidically connects first fluid source 12 and actuation pump 30. Second passage 94 of filter 90 fluidically connects each control valve 70 to second fluid outlet 24. In the example shown in FIG. 3, the heated fuel from each actuator 40 is directed back through filter 90 to help heat filter 90. Heating filter 90 prevents ice accretion on or in filter 90. Additionally, heating filter 90 helps preheat fluid from first fluid source 12 to improve the heat transfer between fluid from first fluid source 12 and fluid from second fluid source 20. Lastly, heating filter 90 helps prevent fluid from second fluid source 20 from losing too much heat. If fluid from second fluid source 20 loses too much heat, the viscosity can be negatively affected, which can cause issues pumping the fluid from second fluid source 20.

As discussed above, actuation pump 30 and second fluid pump 22 can adjust the speed of the flow of fluid from first fluid source 12 and fluid from second fluid source 20, respectively, to adjust the amount of heat transfer between the fluid from first fluid source 12 and the fluid from second fluid source 20. Moreover, more than one actuator 40 and more than one control valve 70 can be added to system 10 to increase the heat exchange capabilities between fluid from first fluid source 12 and fluid from second fluid source 20. For example, adding additional actuators 40 to system 10 increases the surface area between the fluid of first fluid source 12 and the fluid of second fluid source 20. To further improve control of the heat exchange between the fluid from first fluid source 12 and the fluid from second fluid source 20, each actuator 40 can have its own actuation pump 30 to control the rate of the fluid from first fluid source 12 flowing through actuator 40.

### Discussion of Possible Embodiments

The following are non-exclusive descriptions of possible embodiments of the present invention.

A system includes a fuel source, an actuation pump fluidically connected to the fuel source, and an actuator fluidically connected to the actuation pump. The actuator includes a housing, a first chamber inside the housing, a cylinder within the housing, and a second chamber within the housing. The cylinder fluidically isolates the first chamber from the second chamber. The actuator also includes a rod extending from the cylinder and through the second chamber and the housing. A shell is spaced apart from the housing and defines a fluid gap between the shell and the housing. The shell includes a shell inlet fluidically connected to the fluid gap and a shell outlet fluidically connected to the fluid gap. The system also includes a fuel metering system, a control valve fluidically connecting the first chamber and the second chamber with the actuation pump and the fuel metering system, and an engine oil source. The engine oil source is fluidically connected to the shell inlet.

The system of the preceding paragraph can optionally include, additionally and/or alternatively, any one or more of the following features, configurations and/or additional components:
the control valve is a servo valve fluidically connected between the actuation pump and the actuator and fluidically connected between the actuator and the fuel metering system, wherein the servo valve operates between a first position and a second position;
the servo valve in the first position fluidically connects the actuation pump to the first chamber to pressurize the first chamber and the servo valve in the first position fluidically connects the second chamber to the fuel metering system to depressurize the second chamber and move the cylinder to extend the rod;
the servo valve in the second position fluidically connects the actuation pump to the second chamber to pressurize the second chamber and the servo valve in the second position fluidically connects the first chamber to the fuel metering system to depressurize the first chamber to move the cylinder and retract the rod;
the shell inlet is fluidically connected to an engine oil source via a pump, and the shell outlet is fluidically connected to an engine oil supply tank;
a second actuator, wherein the second actuator comprises: a housing; a first chamber inside the housing; a cylinder within the housing; a second chamber within the housing, wherein the cylinder fluidically isolates the first chamber from the second chamber; a rod extending from the cylinder and through the second chamber and the housing; and a shell spaced apart from the housing and defining a fluid gap between the shell and the housing, wherein the shell comprises: a shell inlet fluidically connected to the fluid gap; and a shell outlet fluidically connected to the fluid gap;
a second servo valve fluidically connected between the actuation pump and the second actuator and fluidically between the second actuator and the fuel metering system, wherein the servo valve operates between a first position and a second position;
the second servo valve in the first position fluidically connects the actuation pump to the first chamber of the second actuator to pressurize the first chamber of the second actuator and the servo valve in the first position fluidically connects the second chamber of the second actuator to the fuel metering system to depressurize the second chamber of the second actuator to move the cylinder and extend the rod of the second actuator, and wherein the servo valve in the second position fluidically connects the actuation pump to the second chamber of the second actuator to pressurize the second chamber of the second actuator and the servo valve in the second position fluidically connects the first chamber of the second actuator to the fuel metering system to depressurize the first chamber of the second actuator to move the cylinder of the second actuator and retract the rod of the second actuator;
a boost pump fluidically connected between the fuel source and the actuation pump; and a filter fluidically connected between the boost pump and the actuation pump, wherein the filter comprises: a first passage that fluidically connects the fuel source and the actuation pump; and a second passage that fluidically connects the actuator and the fuel metering system; and/or
the control valve operates between a first position and a second position, the control valve in the first position fluidically connects the actuation pump to the first chamber to pressurize the first chamber and the servo valve in the first position fluidically connects the second chamber to the filter to depressurize the second chamber and move the cylinder to extend the rod, and the control valve in the second position fluidically connects the actuation pump to the second chamber to pressurize the second chamber and the servo valve in the second position fluidically connects the first chamber to the filter to depressurize the first chamber to move the cylinder and retract the rod.

In another example, a system includes a first fluid source, an actuation pump fluidically connected to the first fluid source, and an actuator. The actuator includes a housing, a first chamber inside the housing, a cylinder within the housing, and a second chamber within the housing. The cylinder fluidically isolates the first chamber from the second chamber. The actuator also includes a rod connected to the cylinder and extending through the second chamber and the housing. A shell is spaced apart from the housing and defines a fluid gap between the shell and the housing. The shell includes a shell inlet fluidically connected to the fluid gap and a shell outlet fluidically connected to the fluid gap. The system also includes a first fluid outlet, a control valve fluidically connecting the first chamber and the second chamber with the actuation pump and the first fluid outlet, and a second fluid source. The second fluid source is fluidically connected to the shell inlet. The first fluid source is at a first temperature and the second fluid source is at a second temperature different from the first temperature.

The system of the preceding paragraph can optionally include, additionally and/or alternatively, any one or more of the following features, configurations and/or additional components:
the first fluid source comprises: a fuel tank; and a boost pump fluidically connected between the fuel tank and the pump;
the control valve is a servo valve fluidically connected between the pump and the actuator and fluidically connected between the actuator and the first fluid outlet, wherein the servo valve operates between a first position and a second position, the servo valve in the first position fluidically connects the pump to the first chamber to pressurize the first chamber and the servo valve in the first position fluidically connects the second chamber to the first fluid outlet to depressurize the second chamber and move the cylinder to extend the rod relative the housing, and the servo valve in the second position fluidically connects the pump to the second chamber to pressurize the second chamber and the servo valve in the second position fluidically connects the first chamber to the first fluid outlet to depressurize the first chamber to move the cylinder and retract the rod relative the housing;
a filter, wherein the filter is fluidically connected between the boost pump and the pump, wherein the filter comprises: a first passage that fluidically connects the first fluid source and the pump; and a second passage that fluidically connects the actuator and the first fluid outlet;
a plurality of actuators, wherein each actuator of the plurality of actuators comprises: a housing; a first chamber inside the housing; a cylinder within the housing; a second chamber within the housing, wherein the cylinder fluidically isolates the first chamber from the second chamber; a rod connected to the cylinder and extending through the second chamber and the housing; and a shell spaced apart from the housing and defining a fluid gap between the shell and the housing, wherein the shell comprises: a shell inlet fluidically connected to the fluid gap; and a shell outlet fluidically connected to the fluid gap, wherein the shell inlet of each actuator of the plurality of actuators is fluidically connected to the second fluid source; and/or
the shell inlet is fluidically connected to an engine oil source via an oil pump, and the shell outlet is fluidically connected to an engine oil supply tank.

In another example, an actuator includes a housing, a first chamber inside the housing, a cylinder within the housing, and a second chamber within the housing. The cylinder fluidically isolates the first chamber from the second chamber. The actuator also includes a rod connected to the cylinder and extending through the second chamber and the housing. A shell is spaced apart from the housing and defines a fluid gap between the shell and the housing. The shell includes a shell inlet fluidically connected to the fluid gap and a shell outlet fluidically connected to the fluid gap.

The actuator of the preceding paragraph can optionally include, additionally and/or alternatively, any one or more of the following features, configurations and/or additional components:
the shell substantially encloses the housing of the actuator;
the shell comprises: a shell inlet fluidically connected to the fluid gap; and a shell outlet fluidically connected to the fluid gap; and/or
the first chamber and the second chamber are fluidically connected to a control valve that operates between a first position and a second position.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A system comprising:
a fuel source (12);
an actuation pump (30) fluidically connected to the fuel source;
an actuator (40) fluidically connected to the actuation pump, wherein the actuator comprises:
a housing (42);
a first chamber (44) inside the housing;
a cylinder (46) within the housing;
a second chamber (48) within the housing, wherein the cylinder fluidically isolates the first chamber from the second chamber;
a rod (50) extending from the cylinder and through the second chamber and the housing; and
a shell (52) spaced apart from the housing and defining a fluid gap between the shell and the housing, wherein the shell comprises:
a shell inlet fluidically connected to the fluid gap; and
a shell outlet fluidically connected to the fluid gap; and
a fuel metering system (14);
a control valve (70) fluidically connecting the first chamber and the second chamber with the actuation pump and the fuel metering system; and
an engine oil source (20), wherein the engine oil source is fluidically connected to the shell inlet.

2. The system of claim 1, wherein the control valve (70) is a servo valve fluidically connected between the actuation pump (30) and the actuator (40) and fluidically connected between the actuator (40) and the fuel metering system (14), wherein the servo valve operates between a first position and a second position.

3. The system of claim 2, wherein the servo valve in the first position fluidically connects the actuation pump (30) to the first chamber (44) to pressurize the first chamber and the servo valve in the first position fluidically connects the second chamber (48) to the fuel metering system (14) to depressurize the second chamber and move the cylinder to extend the rod (50).

4. The system of claim 3, wherein the servo valve in the second position fluidically connects the actuation pump (30) to the second chamber (48) to pressurize the second chamber (48) and the servo valve in the second position fluidically connects the first chamber (44) to the fuel metering system (14) to depressurize the first chamber to move the cylinder and retract the rod (50).

5. The system of claim 4, wherein the shell inlet is fluidically connected to an engine oil source via a pump, and the shell outlet is fluidically connected to an engine oil supply tank.

6. The system of claim 5, further comprising:
a second actuator, wherein the second actuator comprises:
a housing (42);
a first chamber (44) inside the housing;
a cylinder (46) within the housing;
a second chamber (48) within the housing, wherein the cylinder fluidically isolates the first chamber from the second chamber;
a rod (50) extending from the cylinder and through the second chamber and the housing; and
a shell (52) spaced apart from the housing and defining a fluid gap between the shell and the housing, wherein the shell comprises:
a shell inlet fluidically connected to the fluid gap; and
a shell outlet fluidically connected to the fluid gap.

7. The system of claim 6, further comprising:
a second servo valve fluidically connected between the actuation pump (30) and the second actuator and fluidically between the second actuator and the fuel metering system (14), wherein the servo valve operates between a first position and a second position.

8. The system of claim 7, wherein the second servo valve in the first position fluidically connects the actuation pump (30) to the first chamber (44) of the second actuator to pressurize the first chamber of the second actuator and the servo valve in the first position fluidically connects the second chamber (48) of the second actuator to the fuel metering system to depressurize the second chamber of the second actuator to move the cylinder and extend the rod (50) of the second actuator, and wherein the servo valve in the second position fluidically connects the actuation pump to the second chamber of the second actuator to pressurize the second chamber (48) of the second actuator and the servo valve in the second position fluidically connects the first chamber (44) of the second actuator to the fuel metering system (14) to depressurize the first chamber of the second actuator to move the cylinder of the second actuator and retract the rod (50) of the second actuator.

9. The system of claim 8 further comprising:
a boost pump (80) fluidically connected between the fuel source (12) and the actuation pump (30); and
a filter (90) fluidically connected between the boost pump (80) and the actuation pump (30), wherein the filter comprises:
a first passage (92) that fluidically connects the fuel source and the actuation pump; and
a second passage (94) that fluidically connects the actuator and the fuel metering system.

10. The system of claim 9, wherein the control valve (70) operates between a first position and a second position, the control valve in the first position fluidically connects the actuation pump (30) to the first chamber (44) to pressurize the first chamber and the servo valve in the first position fluidically connects the second chamber to the filter to depressurize the second chamber and move the cylinder to extend the rod (50), and the control valve (70) in the second position fluidically connects the actuation pump (30) to the second chamber (48) to pressurize the second chamber and the servo valve in the second position fluidically connects the first chamber (44) to the filter (90) to depressurize the first chamber (44) to move the cylinder and retract the rod (50).

11. An actuator (40) comprising:
a housing (42);
a first chamber (44) inside the housing;
a cylinder (46) within the housing;
a second chamber (48) within the housing, wherein the cylinder fluidically isolates the first chamber from the second chamber;
a rod (50) connected to the cylinder and extending through the second chamber and the housing; and
a shell (52) spaced apart from the housing and defining a fluid gap between the shell and the housing.

12. The actuator of claim 11, wherein the shell (52) substantially encloses the housing (42) of the actuator.

13. The actuator of claim 12, wherein the shell (52) comprises:
a shell inlet fluidically connected to the fluid gap; and
a shell outlet fluidically connected to the fluid gap.

14. The actuator of claim 13, wherein the first chamber (44) and the second chamber (48) are fluidically connected to a control valve (70) that operates between a first position and a second position.
